# EUROPÄISCHE PATENTSCHRIFT

(11) **EP 3 458 821 B1**
(45) Veröffentlichungstag und Bekanntmachung des Hinweises auf die Patenterteilung: **16.08.2023**
(21) Anmeldenummer: 17724542.0
(22) Anmeldetag: 17.05.2017
(51) Int. Cl.: G01L 19/00, G01L 19/06

(54) **VERFAHREN ZUM HERSTELLEN EINES DRUCKMITTLERSYSTEMS**
METHOD FOR PRODUCING A PRESSURE TRANSMITTER SYSTEM
PROCÉDÉ DE FABRICATION D'UN SYSTÈME DE TRANSMETTEUR DE PRESSION

(30) Priorität: 19.05.2016 DE 102016109252
(43) Veröffentlichungstag der Anmeldung: 27.03.2019
(73) Patentinhaber: Endress+Hauser SE+Co. KG, 79689 Maulburg (DE)
(72) Erfinder: SCHLACHTER, Marc Andreas, 79664 Wehr (DE); KROPF, Stefan, 79692 Kleines Wiesenthal (DE); LEUTHNER, Dietmar, 79576 Weil am Rhein (DE); BERGER, Markus, 79664 Wehr (DE)
(74) Vertreter: Laufer, Michael
(86) Internationale Anmeldenummer: PCT/EP2017/061805
(87) Internationale Veröffentlichungsnummer: WO 2017/198692

(56) Entgegenhaltungen:
- DE-A1- 2 531 787
- DE-C- 853 826
- US-A1- 2005 225 035
- US-A1- 2012 085 180

## Beschreibung

Die Erfindung bezieht sich auf ein Verfahren zum Herstellen eines Druckmittlersystems sowie ein Druckmittlersystem.

Druckmittlersysteme zum Übertragen eines Mediendrucks umfassen gewöhnlich einen Druckmittlerkörper bzw. einen Membranträgerkörper mit einer medienseitigen Oberfläche, und eine Trennmembran, die unter Ausbildung einer Druckkammer zwischen der Trennmembran und dem Druckmittlerkörper entlang zumindest eines Randes gasdicht mit dem Druckmittlerkörper verbunden ist, wobei sich von der Druckkammer ein Kanal durch den Druckmittlerkörper erstreckt, und die Druckkammer, und der Kanal mit einer Übertragungsflüssigkeit gefüllt sind, um einen an der Trennmembran anstehende Mediendruck zu einem Druckempfänger zu übertragen. Ferner umfassen derartige Druckmittlersysteme ein Kapillarrohr und einen Kapillaradapter, wobei das Kapillarohr über den Kapillaradapter an den Druckmittlerkörper bzw. Membranträgerkörper angeschlossen ist, um den Mediendruck an den Druckempfänger zu übertragen.

Aus der US 2021/085180 A1 ist ein Messgerät zur Messung und/oder Überwachung einer physikalischen Eigenschaft, wie bspw. Druck bekannt geworden. Aus der US 2005/225035 A1 ist eine Druckmittlereinheit mit einem Verlängerungsstück und Verfahren zur Herstellung der Druckmittlereinheit bekannt geworden. Aus der DE 853 826 C ist eine Druckmesseinrichtung bekannt geworden, die mit einer besonderen gegenüber dem zu messenden Medium getrennten Übertragungs- und Messflüssigkeit arbeitet. Ferner ist aus der DE 25 31 787 A1 ein Druckaufnehmer für heiße Massen bekannt geworden.

Um einen derartiges Druckmittlersystem herzustellen bedarf es einem aufwendigen und teuren Fertigungsprozess. Hierbei wird zuerst das Kapillarrohr in eine Durchbohrung des Kapillaradapters eingeführt bis es im Wesentlichen bündig mit einer Stirnfläche des Kapillaradapters abschließt. An dieser Stirnfläche wird anschließend das Kapillarrohr an den Kapillaradapter angeschweißt, bevor der Adapter mit dem Kapillarrohr an den Druckmittlerkörper fixiert wird. Die Fixierung des Kapillaradapters mit dem Kapillarrohr an dem Druckmittlerkörper erfolgt anschließend und bedarf aufgrund des bereits angeschweißten Kapillarrohres einem manuellen Nachführen des Kapillarrohres während des Schweißens.

Im nächsten Schritt wird ein Schutzschlauch über das Kapillarrohr gezogen und einseitig in eine Bohrung des Kapillaradapters, welche sich bis zu einer definierten Tiefe in Längsrichtung des Kapillaradapters erstreckt und in der Durchbohrung mündet, geführt. Der so in die Ausnehmung eingeführte Schutzschlauch wird anschließend an dem Kapillaradapter fixiert. Dieser Fertigungsprozess weist, wie bereits angedeutet, den Nachteil auf, dass er relativ aufwendig und somit auch teuer ist.

Ferner weisen derartig hergestellte Druckmittlersysteme eine schlechte Beständigkeit bei korrosionsfördernden Umgebungsbedingungen auf, da die Schweißnaht zwischen Kapillaradapter und Kapillarrohr nicht zugänglich für eine Nachbearbeitung ist, so dass es vermehrt zur Korrosionsbildung kommt. Diese führt wiederum dazu, dass es schlussendlich zu einem Ölaustritt an der korrodierten Stelle kommt.

Ein weiterer nachteiliger Aspekt derartig hergestellter Druckmittler ist, dass durch die Bohrung des Kapillaradapters in die der Schutzschlauch eingeführt ist, es zu einer Art Sammelfunktion für Flüssigkeiten, bspw. Regenwasser, kommt und somit wiederum zur vermehrter Korrosionsbildung im Übergangsbereich der Bohrung und der Durchbohrung.

Es ist eine Aufgabe der Erfindung, ein vereinfachtes und kostengünstigeres Verfahren zur Herstellung eines Druckmittlersystems, sowie ein einfacheres und kostengünstiger herstellbares Druckmittlersystem mit erhöhter Lebenserwartung anzugeben.

Die Aufgabe wird erfindungsgemäß durch ein Verfahren zum Herstellen eines Druckmittlersystems gemäß Patentanspruch 1 gelöst.

Erfindungsgemäß wird ein Herstellungsverfahren vorgeschlagen, bei dem die Abfolge der Schweißprozesse so geändert wurde, dass sich das Druckmittlersystem von innen formieren lässt. Da die Schweißungen standardmäßig in einer Schutzgasatmosphäre durchgeführt werden, können Anlauffarben und Verzunderungen im Innenbereich des Kapillarrohres verhindert werden. Darüber hinaus wird der Korrosionsschutz durch die Schutzgasabdeckung von außen verbessert. Ebenfalls wird durch die konstruktive Umgestaltung verhindert, dass sich ein Umweltmedium, wie bspw. Regenwasser, in kritischen korrosionsanfälligen Bereichen ansammelt.

Eine vorteilhafte Ausführungsform des erfindungsgemäßen Verfahrens sieht vor, dass der Schutzschlauch zumindest punktuell, insbesondere durch Anschweißen, nach dem Aufstecken auf den Kapillaradapter an diesem fixiert wird.

Eine alternative Ausführungsform des erfindungsgemäßen Verfahrens sieht vor, dass der Schutzschlauch mittels einer Pressung an dem Kapillaradapter fixiert wird.

Eine weitere vorteilhafte Ausführungsform des erfindungsgemäßen Verfahrens sieht vor, dass das Anschweißen des Kapillarrohres an den Kapillaradapter mittels eines Orbital-, WIG- oder Laser-Schweißprozesses durchgeführt wird.

Eine weitere vorteilhafte Ausführungsform des erfindungsgemäßen Verfahrens sieht vor, dass beim Bereitstellen des Kapillaradapters die Kapillarrohrschnittstelle derartig ausgestaltet wird, dass die Kapillarschnittstelle einen ersten Anschlag aufweist und das Kapillarrohr bis zu dem ersten Anschlag in die Kapillarschnittstelle angeordnet wird. Alternativ kann vorgesehen sein, dass die Anordnung des Kapillarrohrs und der Kapillarschnittstelle zueinander sowie das Anschweißen auf Stoß erfolgen.

Eine weitere vorteilhafte Ausführungsform des erfindungsgemäßen Verfahrens sieht vor, dass der Schutzschlauch bis zu einer äußeren Stufe, welche beim Bereitstellen des Kapillaradapters vorgesehen wird, auf die Schutzschlauchfassung aufgesteckt wird.

Eine weitere vorteilhafte Ausführungsform des erfindungsgemäßen Verfahrens sieht vor, dass das Anordnen des Kapillarrohres und der Kapillarschnittstelle des Kapillaradapters zueinander nach dem Anschweißen des Kapillaradapters an den Druckmittler erfolgt.

Hinsichtlich des Druckmittlersystems wird die Aufgabe durch ein Druckmittlersystem gemäß Patentanspruch 8 gelöst.

Eine vorteilhafte Weiterbildung des erfindungsgemäßen Druckmittlersystems sieht vor, dass die Schutzschlauchfassung einen äußeren ersten Absatz als Anschlag für den Schutzschlauch umfasst.

Eine weitere vorteilhafte Weiterbildung des erfindungsgemäßen Druckmittlersystems sieht vor, dass die Kapillarschnittstelle am Übergang zur Kapillarleitung einen inneren zweiten Absatz als Anschlag für das Kapillarrohr umfasst.

Eine weitere vorteilhafte Weiterbildung des erfindungsgemäßen Druckmittlersystems sieht vor, dass die Kapillarschnittstelle einen im Wesentlichen konstanten inneren Durchmesser aufweist und sich bis zu einer Stufe des zweiten Absatzes erstreckt. Insbesondere sieht die Weiterbildung vor, dass der innere Durchmesser der Kapillarschnittstelle so gewählt ist, dass dieser im Wesentlichen einem äußeren Durchmesser des Kapillarrohres entspricht, sodass das Kapillarrohr von der Kapillarschnittstelle eng umschlossen ist.

Eine weitere vorteilhafte Weiterbildung des erfindungsgemäßen Druckmittlersystems sieht vor, dass ein Befülladapter mit einem Befüllverschluss an dem Membranträgerkörper befestigt ist und der Kapillaradapter an den Befülladapter des Druckmittlers angeschweißt ist.

Eine alternative Weiterbildung des erfindungsgemäßen Druckmittlersystems sieht vor, dass der Membranträgerkörper eine Befülleinrichtung aufweist und der Kapillaradapter an den Membranträgerkörper des Druckmittlers angeschweißt ist.

Die Erfindung wird anhand der nachfolgenden Zeichnungen näher erläutert. Es zeigt:
Fig. 1: eine Querschnittsansicht eines erfindungsgemäßen Druckmittlersystems,
Fig. 2: eine Querschnittsansicht des Kapillaradapters, und
Fig. 3: einen exemplarischen Verfahrensablauf des erfindungsgemäßen Verfahrens.

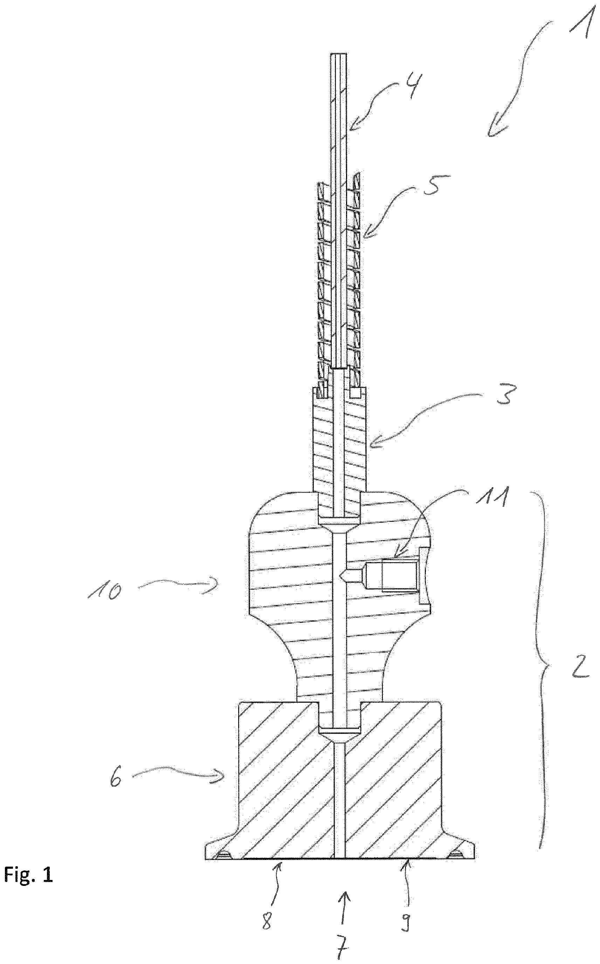

Fig. 1 zeigt eine Querschnittsansicht eines erfindungsgemäßen Druckmittlersystems 1, welches einen Druckmittler 2, ein Kapillaradapter 3, ein Kapillarrohr 4 und ein Schutzschlauch 5 umfasst.

Der Druckmittler 2 umfasst einen metallischen Membranträgerkörper 6, welcher als Drehteil, bspw. aus einem Stück Edelstahl, gefertigt und im Wesentlichen axialsymmetrisch ist. Der metallische Membranträgerkörper 6 hat eine medienseitige Oberfläche 7 und eine Trennmembran 8, die unter Ausbildung einer Druckkammer 9 zwischen der Trennmembran 8 und dem Membranträgerkörper 6 entlang zumindest eines Randes gasdicht bzw. druckbeständig mit dem Membranträgerkörper 6 verbunden ist.

Ferner umfasst der in Fig. 1 dargestellte Druckmittler 2 einen Befülladapter 10, welcher eine integrierte Befülleinrichtung 11 zum Befüllen des Druckmittlersystems mit einer Druckübertragungsflüssigkeit aufweist. Der Befülladapter kann ebenfalls als Drehteil gefertigt und somit im Wesentlichen auch axialsymmetrisch sein. Auch hinsichtlich der Materialwahl hat sich Edelstahl als vorteilhaft erwiesen.

Wie in Fig. 1 dargestellt, kann der Befülladapter als separates Element ausgebildet und mit dem Membranträgerkörper gefügt sein, so dass diese zusammen den Druckmittler bilden. Alternativ hierzu, nicht dargestellt in Fig. 1, kann der Membranträgerkörper 6 des Druckmittlers eine integrierte Befülleinrichtung 11 aufweisen. Es versteht sich von selbst, dass in diesem Fall der Druckmittler keinen separaten Befülladapter aufweist.

Der Befülleinrichtung 11 umfasst typischerweise einen Befülleinlass über den eine Druckübertragungsflüssigkeit einfüllbar ist und einen Befüllverschluss zum Verschließen des Befülleinlasses nach dem Befüllvorgang. Der Befüllverschluss kann bspw. eine Kugel oder eine Schraube sein.

In Abhängigkeit davon, ob der Druckmittler 2 einen separaten Befülladapter 10 oder eine integrierte Befülleinrichtung 11 aufweist, ist der Kapillaradapter 3 entweder an den Befülladapter des Druckmittlers oder den Membranträgerkörper 6 des Druckmittlers angeschweißt.

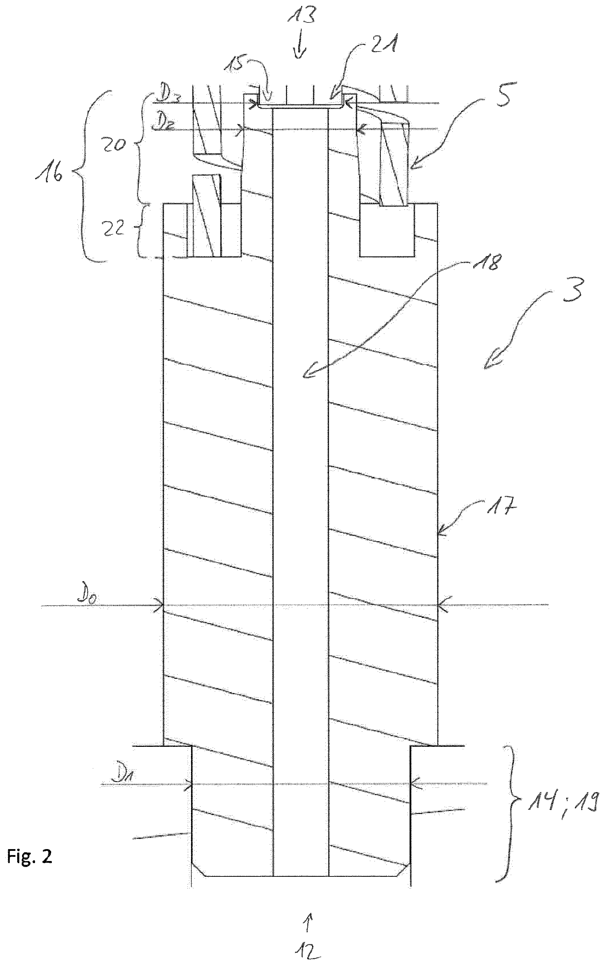

Der Kapillaradapter 3, welcher in Fig. 2 im Querschnitt dargestellt ist, umfasst ebenfalls einen metallischen Grundkörper 17 mit einer ersten Seite bzw. Stirnseite 12 und mit einer der Stirnseite 12 gegenüber liegenden zweiten Seite 13. Auch der Kapillaradapter ist typischerweise als Drehteil hergestellt, so dass er im Wesentlichen axialsymmetrisch bzw. rotationssymmetrisch mit einem äußeren Durchmesser D₀ ausgebildet ist. In den Grundkörper ist ein innerer verbindender Ölpfad 18, eingebracht, welcher sich in Längsrichtung von der ersten Stirnseite 12 zur zweiten Seite 13 durch den Grundkörper 17 erstreckt. Der Ölpfad 18 kann bspw., wie in Fig. 1und 2 dargestellt, durch eine Bohrung und somit in Form einer Kapillarleitung hergestellt sein.

An der ersten Stirnseite 12 umfasst der Kapillaradapter 3 einen Druckmittleranschluss 14, bspw. in Form eines gedrehten ersten Absatzes 19 mit einem ersten Durchmesser D₁. Mit dem Druckmittleranschluss 14 greift der Kapillaradapter 3 in den Befülladapter 10, der eine Aussparung entsprechend dem ersten Durchmesser D₁ des ersten Absatzes 19 aufweist, ein. Der erste Absatze 19 und die Aussparung sind dabei derartig aufeinander abgestimmt und ausgebildet, dass der erste Absatz 19 eng in die Aussparung einführbar bzw. einsteckbar ist.

An der, der ersten Stirnseite gegenüberliegenden, zweiten Seite 13 umfasst der Kapillaradapter eine Schutzschlauchfassung 16, die derartig ausgebildet ist, dass der Schutzschlauch 5, in Fig. 2 nur teilweise dargestellt, äußerlich über die Schutzschlauchfassung 16 eng aufsteckbar ist. Die Schutzschlauchfassung 16 weist hierzu vorzugsweise einen äußeren zweiten Absatz 20 mit einem zweiten Durchmesser D₂ auf. Der Durchmesser D₂ ist derartig gewählt, dass der Schutzschlauch 5 äußerlich eng über die Schutzschlauchfassung 16 aufsteckbar ist. Ferner weist die Schutzschlauchfassung 16 eine ringförmige Ausnehmung 22 auf, welche zwischen einer äußerlichen Oberfläche des Grundkörpers und dem inneren Ölpfad bzw. der Kapillarleitung in den Grundkörper eingebracht ist und zur Aufnahme des Schutzschlauches 5 dient.

An der zweiten Stirnseite 13 weist der Kapillaradapter 3 ferner eine Kapillarschnittstelle 15 auf. Diese Kapillarschnittstelle ist in Form einer Kapillarrohröffnung mit einem dritten Durchmesser D₃ ausgebildet, wobei der innere Ölpfad bzw. die Kapillarleitung 18 in die Kapillarrohröffnung mündet. Die Kapillarrohröffnung 15 ist dabei vorzugsweise so ausgebildet, dass an einem Übergang zwischen dem inneren Ölpfad bzw. der Kapillarleitung 18 und der Kapillarrohröffnung ein innerer dritter Absatz 21 in Form einer inneren Stufe ausgebildet ist. Die innere Stufe dient in diesem Fall als Anschlag für das Kapillarrohr 4 bei der Montage des Druckmittlersystems. Dementsprechend kann durch die Tiefe der Kapillarrohröffnung die Eintauchtiefe des Kapillarrohres in den Kapillaradapter bei der Montage festgelegt werden. Vorzugsweise wird die Eintauchtiefe so gewählt, dass das Kapillarrohr nur teilweise in den Kapillaradapter einsteckbar ist und nicht, wie bspw. aus dem Stand der Technik bekannt, das Kapillarrohr den Kapillaradapter vollständig durchzieht. Ferner weist die Kapillarrohröffnung 15 einen im Wesentlichen konstanten Durchmesser D₃ auf. Der innere Durchmesser D₃ ist derartig gewählt, dass das Kapillarrohr 5 eng in die Kapillarrohröffnung 15 einsteckbar ist.

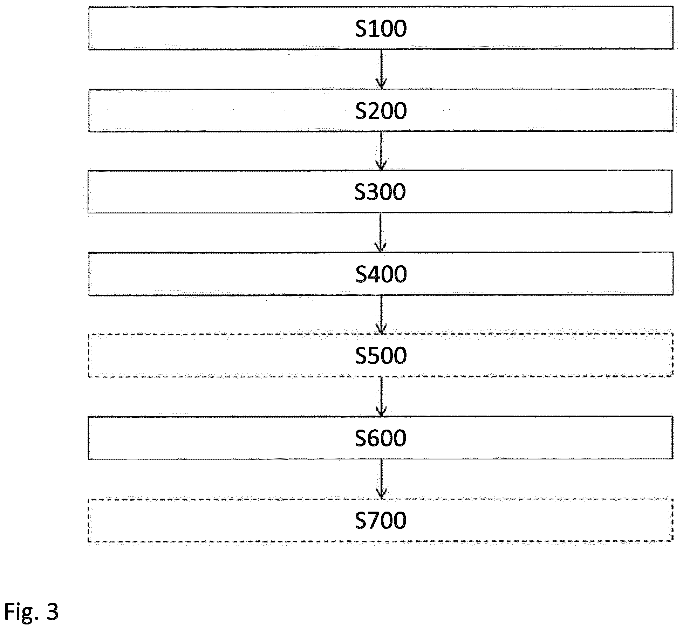

Fig. 3 zeigt einen exemplarischen Verfahrensablauf des erfindungsgemäßen Verfahrens, welches die folgenden Verfahrensschritte vorsieht:
Im ersten Verfahrensschritt S100 wird der Kapillaradapter 3 und der Druckmittler 2 bereitgestellt. Diese werden vorzugsweise in Form von Drehteilen aus einem metallischen Material, bspw. Edelstahl, entsprechend einer zuvor beschriebenen Ausführungsform hergestellt.

Im zweiten Verfahrensschritt S200 wird der Kapillaradapter 3 an den Druckmittler 2 angeschweißt. Im Gegensatz zu den aus dem Stand der Technik bekannten Herstellungsverfahren ist zum Zeitpunkt des Anschweißens des Kapillaradapters an den Druckmittler das Kapillarrohr noch nicht an den Kapillaradapter befestigt, so dass sich eine erhöhte Flexibilität beim Schweißen ergibt.

Im dritten Verfahrensschritt S300 wird das Kapillarrohr 4 und die Kapillarschnittstelle 15 zueinander angeordnet. Hierbei kann eine Variante vorsehen, dass das Kapillarrohr 4 in die Kapillarrohröffnung als Kapillarschnittstelle 15 eingebracht wird. Wie zuvor beschrieben, wird das Kapillarrohr hierbei bis zu der inneren Stufe als Anschlag in die Kapillarrohröffnung eingeführt. Bei einer alternativen Variante werden das Kapillarrohr 4 und die Kapillarschnittstelle 15 auf Stoß zueinander angeordnet.

Im vierten Verfahrensschritt S400 wird das Kapillarrohr 4 an den Kapillaradapter 3 stoffschlüssig angeschweißt. Dies wird vorzugsweise mittels eines Orbital-, WIG- oder Laser-Schweißprozesses durchgeführt. In dem Fall, dass eine Anordnung des Kapillarrohr 4 und der Kapillarschnittstelle auf Stoß erfolgt, findet auch eine Schweißung auf Stoß statt.

Aufgrund der außenliegenden Schweißnaht lässt sich diese in einem, dem vierten Verfahrensschritt folgenden, jedoch optionalen, fünften Schritt S500 nachbearbeiten. So können bspw. beim Schweißen entstandene Anlauffarben reduziert werden. Das Nachbearbeiten der Schweißnaht führt zu einer weniger korrosionsanfälligen Oberfläche im Bereich der Schweißnaht.

Im sechsten Verfahrensschritt S600 wird der Schutzschlauch 5 auf die Schutzschlauchfassung 16 des Kapillaradapters 3 aufgesteckt und vorzugsweise in die ringförmige Ausnehmung eingeführt.

Im siebten, wiederum optionalen, Verfahrensschritt S700 wird nach dem Aufstecken des Schutzschlauches auf die Schutzschlauchfassung dieser fixiert. Dies kann bspw. über eine Punktschweißung erfolgen, bei der zumindest ein Schweißpunkt, vorzugsweise mehrere Schweißpunkte gesetzt werden. Alternativ kann die Fixierung auch durch eine Pressung realisiert werden.

### Bezugszeichenliste

- 1: Druckmittlersystem
- 2: Druckmittler
- 3: Kapillaradapter
- 4: Kapillarrohr
- 5: Schutzschlauch
- 6: Membranträgerkörper
- 7: Medienseitige Oberfläche
- 8: Trennmembran
- 9: Druckkammer
- 10: Befülladapter
- 11: Befülleinrichtung
- 12: Erste Seite bzw. Stirnseite
- 13: Zweite Seite bzw. der Stirnseite gegenüberliegende Seite
- 14: Druckmittleranschluss
- 15: Kapillarschnittstelle
- 16: Schutzschlauchfassung
- 17: Grundkörper des Kapillaradapters
- 18: innerer verbindender Ölpfad des Grundkörpers
- 19: Erster Absatz
- 20: Zweiter Absatz
- 21: Dritter Absatz
- 22: Ringförmige Ausnehmung

## Patentansprüche

1. Verfahren zum Herstellen eines Druckmittlersystems (1) mit folgenden Schritten:
- Bereitstellen eines Kapillarrohres (4);
- Bereitstellen eines Kapillaradapters (3) umfassend einen Grundkörper (17) mit einer inneren verbindendenden Kapillarleitung (18), welche sich in Längsrichtung von einem ersten Ende (12) zu einem zweiten Ende (13) des Grundkörpers (17) erstreckt, wobei das erste Ende (12) des Kapillaradapters (3) einen Druckmittleranschluss (14) aufweist, mit dem der Kapillaradapter (3) mit dem Druckmittler (2) verbindbar ist und das zweite Ende (13) des Kapillaradapters (3) eine Kapillarschnittstelle (15) aufweist, in die die Kapillarleitung (18) mündet, wobei das Kapillarrohr (4) und die Kapillarschnittstelle (15) derartig ausgebildet sind, dass das Kapillarrohr (4) bis zu einer vorbestimmten Tiefe in die Kapillarschnittstelle (15) einführbar ist und das Kapillarrohr (4) umschließt,
- Bereitstellen eines Druckmittlers (2), welcher zumindest einen Membranträgerkörper (6) und eine Trennmembran (8), die unter Ausbildung einer Druckkammer (9) zwischen der Trennmembran (8) und dem Membranträgerkörper (6) entlang zumindest eines Randes gasdicht mit dem Membranträgerkörper (6) verbunden ist, aufweist;
- Anschweißen des Kapillaradapters (3) an den Druckmittler (2);
- Einführen des Kapillarrohres (4) in die Kapillarschnittstelle (15) des Kapillaradapters (3)bis zu der vorbestimmten Tiefe, wobei die Tiefe so gewählt wird, dass das Kapillarrohr (4) nur teilweise in den Kapillaradapter (3) eingesteckt wird und nicht den Kapillaradapter (3) vollständig durchzieht aufnehmen;
- Anschweißen des Kapillarrohres (4) an dem zweiten Ende des Kapillaradapters (3); und
- Aufstecken eines Schutzschlauches (5) äußerlich eng über eine Schutzschlauchfassung (16) des Kapillaradapters (3).

2. Verfahren nach Anspruch 1, wobei der Schutzschlauch (5) zumindest punktuell nach dem Aufstecken auf den Kapillaradapter (3) an diesem fixiert wird.

3. Verfahren nach Anspruch 1, wobei der Schutzschlauch (5) mittels einer Pressung an dem Kapillaradapter (3) fixiert wird.

4. Verfahren nach einem oder mehreren der vorhergehenden Ansprüche, wobei das Anschweißen des Kapillarrohres (4) an den Kapillaradapter (3) mittels eines Orbital-, WIG- oder Laser-Schweißprozesses durchgeführt wird.

5. Verfahren nach einem oder mehreren der vorhergehenden Ansprüche, wobei beim Bereitstellen des Kapillaradapters (3) die Kapillarschnittstelle (15) derartig ausgestaltet wird, dass sie einen ersten Anschlag aufweist und das Kapillarrohr (4) bis zu dem ersten Anschlag in die Kapillarschnittstelle (15) angeordnet wird.

6. Verfahren nach einem oder mehreren der vorhergehenden Ansprüche, wobei der Schutzschlauch (5) bis zu einer äußeren Stufe, welche beim Bereitstellen des Kapillaradapters (3) vorgesehen wird, auf die Schutzschlauchfassung (16) aufgesteckt wird.

7. Verfahren nach einem oder mehreren der vorhergehenden Ansprüche, wobei das Anordnen des Kapillarrohres (4) und der Kapillarschnittstelle (15) des Kapillaradapters (3) zueinander nach dem Anschweißen des Kapillaradapters (3) an den Druckmittler (2) erfolgt.

8. Druckmittlersystem aufweisend:
- einen Druckmittler (2), welcher zumindest einen Membranträgerkörper (6) und eine Trennmembran (8), die unter Ausbildung einer Druckkammer (9) zwischen der Trennmembran (8) und dem Membranträgerkörper (6) entlang zumindest eines Randes gasdicht mit dem Membranträgerkörper (6) verbunden ist,
- ein Kapillarrohr (4),
- einen Schutzschlauch (5), und
- einen Kapillaradapter (3) umfassend einen Grundkörper (17) mit einer inneren verbindendenden Kapillarleitung (18), welche sich in Längsrichtung von einem ersten Ende (12) zu einem zweiten Ende (13) des Grundkörpers (17) erstreckt, wobei das erste Ende (12) des Kapillaradapters (3) einen Druckmittleranschluss (14) aufweist, mit dem der Kapillaradapter (3) mit dem Druckmittler (2) verbunden ist und das zweite Ende (13) des Kapillaradapters (3) eine Kapillarschnittstelle (15) aufweist, in die die Kapillarleitung (18) mündet, wobei das Kapillarrohr (4) und die Kapillarschnittstelle (15) derartig ausgebildet sind, dass das Kapillarrohr (4) bis zu einer vorbestimmten Tiefe in die Kapillarschnittstelle (15) eingeführt ist und das Kapillarrohr (4) umschließt, wobei die Tiefe so gewählt ist, dass das Kapillarrohr (4) nur teilweise in den Kapillaradapter (3) eingesteckt ist und nicht den Kapillaradapter (3) vollständig durchzieht, wobei das Kapillarrohr (4) am zweiten Ende (13) an den Kapillaradapter (3) angeschweißt ist und wobei das zweite Ende (13) des Grundkörpers (17) ferner derartig in Form einer Schutzschlauchfassung (16) ausgebildet ist, dass der Schutzschlauch (5) äußerlich über die Schutzschlauchfassung (16) eng aufsteckbar ist.

9. Druckmittlersystem nach Anspruch 8, wobei die Schutzschlauchfassung (16) einen äußeren ersten Absatz (19) als Anschlag für den Schutzschlauch (5) umfasst.

10. Druckmittlersystem nach einem der Ansprüche 8 oder 9, wobei die Kapillarschnittstelle (15) am Übergang zur Kapillarleitung (18) einen inneren zweiten Absatz (20) als Anschlag für das Kapillarrohr (4) umfasst.

11. Druckmittlersystem nach zumindest einem der Ansprüche 8 bis 9, wobei die Kapillarschnittstelle (15) einen konstanten inneren Durchmesser aufweist und sich bis zu einer Stufe des zweiten Absatzes erstreckt.

12. Druckmittlersystem nach Anspruch 11, wobei der innere Durchmesser der Kapillarschnittstelle (15) so gewählt ist, dass dieser einem äußeren Durchmesser des Kapillarrohres (4) entspricht, sodass das Kapillarrohr (4) von der Kapillarschnittstelle (15) eng umschlossen ist.

13. Druckmittlersystem nach zumindest einem der Ansprüche 8 bis 12, wobei ein Befülladapter (10) mit einem Befüllverschluss (11) an dem Membranträgerkörper (6) befestigt ist und der Kapillaradapter (3) an den Befülladapter (10) des Druckmittlers (2) angeschweißt ist.

14. Druckmittlersystem nach zumindest einem der Ansprüche 8 bis 12, wobei der Membranträgerkörper (6) eine Befülleinrichtung (11) aufweist und der Kapillaradapter (3) an den Membranträgerkörper (6) des Druckmittlers (2) angeschweißt ist.

## Claims

1. A method of producing a pressure transmitter system (1) with the following steps:
- Providing a capillary tube (4);
- Providing a capillary adapter (3) comprising a basic body (17) with an inner connecting capillary line (18) which extends in a longitudinal direction from a first end (12) to a second end (13) of the basic body (17), wherein the first end (12) of the capillary adapter (3) has a pressure transmitter connector (14) with which the capillary adapter (3) can be connected to the pressure transmitter (2) and the second end (13) of the capillary adapter (3) has a capillary interface (15) into which the capillary line (18) opens, wherein the capillary tube (4) and the capillary interface (15) are configured such that the capillary tube (4) can be inserted into the capillary interface (15) to a predetermined depth and surrounds the capillary tube (4),
- Providing a pressure transmitter (2) which has at least one diaphragm platform (6) and one isolating diaphragm (8) which is connected gas-tightly to the diaphragm platform (6) along at least one edge to form a pressure chamber (9) between the isolating diaphragm (8) and the diaphragm platform (6);
- Welding the capillary adapter (3) to the pressure transmitter (2);
- Inserting the capillary tube (4) into the capillary interface (15) of the capillary adapter (3) to the predetermined depth, wherein the depth is selected so that the capillary tube (4) is only partially plugged into the capillary adapter (3) and does not pass fully through the capillary adapter (3);
- Welding the capillary tube (4) to the second end of the capillary adapter (3); and
- Tightly attaching a protective hose (5) externally via a protective hose seat (16) of the capillary adapter (3).

2. The method as claimed in claim 1, wherein, after being attached to the capillary adapter (3), the protective hose (5) is affixed at least at certain points to the latter.

3. The method as claimed in claim 1, wherein the protective hose (5) is affixed to the capillary adapter (3) by means of compression.

4. The method as claimed in one or more of the preceding claims, wherein the capillary tube (4) is welded to the capillary adapter (3) by means of an orbital, tungsten inert gas or laser welding process.

5. The method as claimed in one or more of the preceding claims, wherein, when providing the capillary adapter (3), the capillary interface (15) is configured such that it has a first stop and the capillary tube (4) is arranged in the capillary interface (15) as far as the first stop.

6. The method as claimed in one or more of the preceding claims, wherein the protective hose (5) is attached to the protective hose seat (16) as far as an outer ledge which is provided when providing the capillary adapter (3).

7. The method as claimed in one or more of the preceding claims, wherein the capillary tube (4) and the capillary interface (15) of the capillary adapter (3) are arranged together after the capillary adapter (3) has been welded to the pressure transmitter (2).

8. A pressure transmitter system having:
- a pressure transmitter (2) which has at least one diaphragm platform (6) and one isolating diaphragm (8) which is connected gas-tightly to the diaphragm platform (6) along at least one edge to form a pressure chamber (9) between the isolating diaphragm (8) and the diaphragm platform (6),
- a capillary tube (4),
- a protective hose (5), and
- a capillary adapter (3) comprising a basic body (17) with an inner connecting capillary line (18) which extends in a longitudinal direction from a first end (12) to a second end (13) of the basic body (17), wherein the first end (12) of the capillary adapter (3) has a pressure transmitter connector (14) with which the capillary adapter (3) is connected to the pressure transmitter (2) and the second end (13) of the capillary adapter (3) has a capillary interface (15) into which the capillary line (18) opens, wherein the capillary tube (4) and the capillary interface (15) are configured such that the capillary tube (4) is inserted into the capillary interface (15) to a predetermined depth and surrounds the capillary tube (4), wherein the depth is selected so that the capillary tube (4) is only partially plugged into the capillary adapter (3) and does not pass fully through the capillary adapter (3), wherein the capillary tube (4) is welded to the capillary adapter (3) at the second end (13) and wherein the second end (13) of the basic body (17) is further configured in the form of a protective hose seat (16) such that the protective hose (5) can be tightly attached externally via the protective hose seat (16).

9. The pressure transmitter system as claimed in claim 8, wherein the protective hose seat (16) comprises an external first ledge (19) as a stop for the protective hose (5).

10. The pressure transmitter system as claimed in one of claims 8 or 9, wherein the capillary interface (15) comprises an inner second ledge (20) as a stop for the capillary tube (4) at the transfer to the capillary line (18).

11. The pressure transmitter system as claimed in at least one of claims 8 to 9, wherein the capillary interface (15) has a constant inner diameter and extends to a ledge of the second stop.

12. The pressure transmitter system as claimed in claim 11, wherein the inner diameter of the capillary interface (15) is selected so that the latter corresponds to an external diameter of the capillary tube (4) so that the capillary tube (4) is closely surrounded by the capillary interface (15).

13. The pressure transmitter system as claimed in at least one of claims 8 to 12, wherein a filling adapter (10) with a filling closure (11) is affixed to the diaphragm platform (6) and the capillary adapter (3) is welded to the filling adapter (10) of the pressure transmitter (2).

14. The pressure transmitter system as claimed in at least one of claims 8 to 12, wherein the diaphragm platform (6) has a filling means (11) and the capillary adapter (3) is welded to the diaphragm platform (6) of the pressure transmitter (2).

## Revendications

1. Procédé destiné à la fabrication d'un système de séparateur (1), lequel procédé comprend les étapes suivantes :
- Mise à disposition d'un tube capillaire (4) ;
- Mise à disposition d'un adaptateur capillaire (3) comprenant un corps de base (17) avec un conduit capillaire de liaison interne (18), lequel conduit s'étend dans le sens longitudinal d'une première extrémité (12) à une deuxième extrémité (13) du corps de base (17), la première extrémité (12) de l'adaptateur capillaire (3) présentant un raccord de séparateur (14), raccord avec lequel l'adaptateur capillaire (3) peut être relié au séparateur (2), et la deuxième extrémité (13) de l'adaptateur capillaire (3) présentant une interface capillaire (15) dans laquelle débouche le conduit capillaire (18), le tube capillaire (4) et l'interface capillaire (15) étant conçus de telle sorte que le tube capillaire (4) peut être introduit jusqu'à une profondeur prédéfinie dans l'interface capillaire (15) et entoure le tube capillaire (4),
- Mise à disposition d'un séparateur (2), lequel comprend au moins un corps de support de membrane (6) et une membrane de séparation (8), laquelle est reliée au corps de support de membrane (6) de manière étanche au gaz le long d'au moins un bord en formant une chambre de pression (9) entre la membrane de séparation (8) et le corps de support de membrane (6),
- Soudage de l'adaptateur capillaire (3) au séparateur (2) ;
- Introduction du tube capillaire (4) dans l'interface capillaire (15) de l'adaptateur capillaire (3) jusqu'à la profondeur prédéfinie, la profondeur étant choisie de manière à ce que le tube capillaire (4) ne soit que partiellement inséré dans l'adaptateur capillaire et ne traverse pas complètement l'adaptateur capillaire (3) ;
- Soudage du tube capillaire (4) à la deuxième extrémité de l'adaptateur capillaire (3) ; et
- Enfichage étroit d'un tuyau de protection (5) à l'extérieur sur une douille de tuyau de protection (16) de l'adaptateur capillaire (3).

2. Procédé selon la revendication 1, pour lequel le tuyau de protection (5) est fixé au moins ponctuellement sur l'adaptateur capillaire (3) après avoir été enfilé sur celui-ci.

3. Procédé selon la revendication 1, pour lequel le tuyau de protection (5) est fixé à l'adaptateur capillaire (3) au moyen d'un pressage.

4. Procédé selon l'une ou plusieurs des revendications précédentes, pour lequel le soudage du tube capillaire (4) à l'adaptateur capillaire (3) est réalisé au moyen d'un procédé de soudage orbital, TIG ou laser.

5. Procédé selon l'une ou plusieurs des revendications précédentes, pour lequel, lors de la mise à disposition de l'adaptateur capillaire (3), l'interface capillaire (15) est conçue de telle sorte qu'elle présente une première butée et le tube capillaire (4) est disposé dans l'interface capillaire (15) jusqu'à la première butée.

6. Procédé selon l'une ou plusieurs des revendications précédentes, pour lequel le tuyau de protection (5) est enfilé sur la douille de tuyau de protection (16) jusqu'à un niveau extérieur qui est prévu lors de la mise à disposition de l'adaptateur capillaire (3).

7. Procédé selon l'une ou plusieurs des revendications précédentes, pour lequel la disposition du tube capillaire (4) et de l'interface capillaire (15) de l'adaptateur capillaire (3) l'un par rapport à l'autre est réalisée après le soudage de l'adaptateur capillaire (3) au séparateur (2).

8. Système de séparateur, comprenant :
- un séparateur (2), lequel comprend au moins un corps de support de membrane (6) et une membrane de séparation (8), laquelle est reliée de manière étanche au gaz au corps de support de membrane (6) le long d'au moins un bord en formant une chambre de pression (9) entre la membrane de séparation (8) et le corps de support de membrane (6),
- un tube capillaire (4)
- un tuyau de protection (5), et
- un adaptateur capillaire (3) comprenant un corps de base (17) avec un conduit capillaire de liaison interne (18), lequel conduit s'étend dans la direction longitudinale d'une première extrémité (12) à une deuxième extrémité (13) du corps de base (17), la première extrémité (12) de l'adaptateur capillaire (3) présentant un raccord de séparateur (14), raccord avec lequel l'adaptateur capillaire (3) est relié au séparateur (2), et la deuxième extrémité (13) de l'adaptateur capillaire (3) présentant une interface capillaire (15) dans laquelle débouche le conduit capillaire (18), le tube capillaire (4) et l'interface capillaire (15) étant conçus de telle sorte que le tube capillaire (4) est introduit dans l'interface capillaire (15) jusqu'à une profondeur prédéfinie et entoure le tube capillaire (4), la profondeur étant choisie de telle sorte que le tube capillaire (4) n'est que partiellement inséré dans l'adaptateur capillaire (3) et ne traverse pas complètement l'adaptateur capillaire (3), le tube capillaire (4) étant soudé à l'adaptateur capillaire (3) au niveau de la deuxième extrémité (13) et la deuxième extrémité (13) du corps de base (17) étant en outre réalisée sous la forme d'une douille de tuyau de protection (16) de telle sorte que le tuyau de protection (5) peut être enfiché étroitement à l'extérieur sur la douille de tuyau de protection (16).

9. Système de séparateur selon la revendication 8, pour lequel la douille de tuyau de protection (16) comprend un premier épaulement extérieur (19) servant de butée pour le tuyau de protection (5).

10. Système de séparateur selon la revendication 8 ou 9, pour lequel l'interface capillaire (15) comprend, au niveau de la transition avec le conduit capillaire (18), un deuxième épaulement intérieur (20) servant de butée pour le tube capillaire (4).

11. Système de séparateur selon au moins l'une des revendications 8 à 9, pour lequel l'interface capillaire (15) présente un diamètre interne constant et s'étend jusqu'à un niveau du deuxième épaulement.

12. Système de séparateur selon la revendication 11, pour lequel le diamètre intérieur de l'interface capillaire (15) est choisi de telle sorte qu'il correspond à un diamètre extérieur du tube capillaire (4), de sorte que le tube capillaire (4) est étroitement entouré par l'interface capillaire (15).

13. Système de séparateur selon au moins l'une des revendications 8 à 12, pour lequel un adaptateur de remplissage (10) avec un bouchon de remplissage (11) est fixé au corps de support de membrane (6) et l'adaptateur capillaire (3) est soudé à l'adaptateur de remplissage (10) du séparateur (2).

14. Système de séparateur selon au moins l'une des revendications 8 à 12, pour lequel le corps de support de membrane (6) comporte un dispositif de remplissage (11) et l'adaptateur capillaire (3) est soudé au corps de support de membrane (6) du séparateur (2).
